(19) Europäisches Patentamt
European Patent Office
Office européen des brevets

(11) Veröffentlichungsnummer: **0 043 952**
**B1**

(12) # EUROPÄISCHE PATENTSCHRIFT

(45) Veröffentlichungstag der Patentschrift: **15.02.84**

(51) Int. Cl.³: **C 08 G 18/38,** C 08 G 18/50, C 08 G 18/34, C 08 G 18/14, C 09 D 5/18

(21) Anmeldenummer: **81104882.6**

(22) Anmeldetag: **24.06.81**

(54) **Gegebenenfalls geschäumte Intumeszenzmassen.**

(30) Priorität: **04.07.80 DE 3025309**

(43) Veröffentlichungstag der Anmeldung: **20.01.82 Patentblatt 82/3**

(45) Bekanntmachung des Hinweises auf die Patenterteilung: **15.02.84 Patentblatt 84/7**

(84) Benannte Vertragsstaaten: **AT BE CH DE FR GB IT LI NL SE**

(56) Entgegenhaltungen:
**DE - B - 1 143 022**
**US - A - 3 684 754**

(73) Patentinhaber: **BAYER AG, Zentralbereich Patente, Marken und Lizenzen, D-5090 Leverkusen 1, Bayerwerk (DE)**

(72) Erfinder: **von Bonin, Wulf, Dr., Mendelssohnstrasse 30, D-5090 Leverkusen 1 (DE)**

**EP 0 043 952 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Gegebenenfalls geschäumte Intumeszenzmassen

Die Erfindung betrifft Intumeszenzmassen auf Basis von geschäumten oder ungeschäumten Polyurethanen, die als Rezepturanteil aromatische Hydroxycarbonsäuren enthalten.

Als Intumeszenzmassen werden solche Massen verstanden, die bei Einwirkung von Feuer und Hitze aufschäumen und dabei einen isolierenden und feuerabweisenden Schaum ausbilden, der die rückwärtigen Bezirke vor der Feuereinwirkung schützt.

Solche Intumeszenzmassen sind in Form von Lacken, Beschichtungen und Mörteln oder Kitten bekannt.

Um eine brauchbare Wirkung zu entfalten, muss eine Intumeszenzmasse verschiedene Eigenschaften in sich vereinen:

1. Aufschäumen über 100 °C und unter 300 °C, zweckmässigerweise zwischen 200 und 300 °C.

2. Das Aufschäumen soll sowohl bei direkter Berührung mit der Flamme, also bei schnellem Erhitzen, erfolgen als auch dann, wenn die Aufschäumtemperatur sehr langsam, z.B. erst im Laufe einer Stunde (Schwelbrand), erreicht wird.

3. Die sehr langsam auf Schäumtemperatur erhitzte Intumeszenzmasse sollte dann immer noch schäumaktiv sein, wenn sie mit einer Flamme in Berührung kommt.

4. Bei langsamem oder schnellem Erhitzen sollte möglichst kein Schrumpf auftreten, bzw. sollte dieser Schrumpf oberhalb der Schäumtemperatur wieder überkompensiert werden.

5. Als besonders vorteilhaft sollten solche Intumeszenzmassen gelten, die in ihrer Wirksamkeit durch Wasserzutritt nicht beeinträchtigt werden.

6. Als vorteilhaft ist auch anzusehen, wenn die Intumeszenzmasse auch in unbeanspruchtem Zustand eine möglichst gute thermische Isolierung besitzt.

7. Intumeszenzmassen sollten halogenfrei sein (Korrosionsgefahr).

Die dem Stand der Technik entsprechenden Intumeszenzmassen erfüllen zwar einen Teil der genannten Anforderungen, es ist jedoch keine Intumeszenzmasse bekannt, die alle diese Forderungen erfüllt.

Es besteht daher ein Bedarf nach derartigen verbesserten Intumeszenzmassen. Die vorliegende Erfindung stellt derartige Intumeszenzmassen zur Verfügung.

Gegenstand der vorliegenden Erfindung sind somit gegebenenfalls geschäumte Intumeszenzmassen, erhalten durch Umsetzung von

1. Polyisocyanaten mit

2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschliessendem Oxalkylieren, und

3. aromatischen Hydroxycarbonsäuren oder deren Salzen und

4. gegebenenfalls Wasser und/oder weiteren organischen Verbindungen mit gegenüber Isocyanaten reaktionsfähigen Wasserstoffatomen.

Bevorzugt sind Intumeszenzmassen, erhalten durch Umsetzung von

50 bis 180 Gew.-Teilen eines Polyisocyanats mit 100 Gew.-Teilen eines Gemisches bestehend aus 25 bis 80 Gew.-% an mindestens zwei Hydroxylgruppen aufweisenden phosphorhaltigen Kondensationsprodukten und 10 bis 65 Gew.-% an Hydroxycarbonsäuren oder deren Salze und 0 bis 8,5 Gew.-% Wasser und/oder 0 bis 50 Gew.-% an weiteren organischen Verbindungen mit gegenüber Isocyanaten reaktionsfähigen Wasserstoffatomen.

Die Herstellung von Polyurethanen aus Polyisocyanaten und den genannten, mindestens zwei Hydroxylgruppen aufweisenden phosphorhaltigen Kondensationsprodukten, ist in der DP-PS 1 143 022, insbesondere von Schaumstoffen mit Schwerentflammbarkeit, bereits beschrieben. Das verhalten so hergestellter Polyurethane beim Erhitzen ist dadurch charakterisiert, dass sie nach Entfernung einer auf sie gerichteten Flamme sofort erlöschen.

Bei der Überprüfung dieser Schaumstofftypen im Hinblick auf ihre Eignung als Intumeszenzwerkstoffe bzw. Intumeszenzmassen zeigte sich, dass sie zweifellos den Anforderungen nach Schwerentflammbarkeit genügen, nicht aber der eingangs unter den Punkten 2, 3 und 4 als wesentlich dargestellten Charakteristik des Verhaltens bei langsamem Erhitzen auf Temperaturen zwischen 200 und 300 °C:

Erhitzt man solche Schäume im Laufe von 60 Minuten auf 260 °C, so verändern sie ihr Volumen kaum, bzw. im allgemeinen erfolgt ein erheblicher Schrumpf. Die in dieser Weise vorerhitzten Muster lassen sich anschliessend auch bei Einwirkung von höheren Temperaturen nicht über das ursprüngliche Volumen hinaus aufschäumen: Eine Eignung zur Verwendung als Intumeszenzmaterialien kann nicht empfohlen werden.

Umfangreiche Versuche, die Schwerentflammbarkeit dieser bekannten Polyurethane mit einem brauchbaren Intumeszenzverhalten zu kombinieren, führten zu dem unerwarteten Befund, dass die erfindungsgemässe Verwendung von aromatischen Hydroxycarbonsäuren oder ihren Salzen zum Erfolg führt.

Überraschenderweise schäumen nicht nur massive derartig hergestellte Polyurethane beim geschilderten Erhitzungstest und in der Flamme kräftig auf, sondern auch Schaumstoffe mit niedrigen Raumgewichten z.B. zwischen 40 und 400 kg/m$^3$. Weiterhin ist es überraschend, dass die z.B. auf 260 °C vorerhitzten Polyurethanprodukte bei anschliessendem Beaufschlagen mit erhöhten Temperaturen z.B. mit einer Flamme

nochmals weiter aufhzuschäumen in der Lage sind.

Es ist fernerhin überraschend, dass der Zusatz von aromatischen Hydroxycarbonsäuren und/oder deren Salzen die Herstellung eines Schaumstoffes nicht beeinträchtigt, sondern es sogar oft erlaubt, auf die üblicherweise in der Polyurethan-Schaumstofftechnik gebräuchlichen Katalysatoren, Schaumstabilisatoren und Emulgatoren zu verzichten.

Ausserdem zeigte sich, dass die erfindungsgemäss zugänglichen Polyurethane, selbst wenn sie als Schaumstoffe mit hoher Oberfläche vorliegen, durch Wasserlagerung in Bezug auf ihre Verwendung als Intumeszenzmassen nicht unwirksam werden.

Weiterhin ist es durch die vorliegende Erfindung möglich, nunmehr Intumeszenzmaterialien in Form von Schaumstoffen einzusetzen, wodurch nicht nur das Intumeszenzmaterial selbst bereits als thermisches Isoliermaterial auch ohne Hitzebeanspruchung fungieren kann, sondern auch völlig neuartige konstruktive Möglichkeiten für Intumeszenzstoffe eröffnet werden.

Schliesslich werden erfindungsgemäss elastische, weiche, harte geschäumte oder ungeschäumte Intumeszenzmassen zugänglich, die halogenfrei sind, so dass im Brandfall keine durch die Intumeszenzmasse bewirkte Halogenwasserstoff-Korrosion zu befürchten ist.

Die erfindungsgemäss erhältlichen Produkte, wobei von besonderem Interesse die harten, z.B. als Schaumstoffe vorliegenden Typen sind, lassen sich ohne Verlust ihrer Intumeszenzwirkung thermoplastisch bei Temperaturen unterhalb ihres Zersetzungspunktes, d.h. bei Temperaturen zwischen 180 und 200 °C verformen. Dieses überraschende Verhalten gestattet z.B. die Verpressung zu Formteilen oder die Umformung von Schaumstoff-Vorfabrikaten zu neuartigen Formteilen.

Bei der Herstellung der neuen Intumeszenzmaterialien kann kontinuierlich oder diskontinuierlich gearbeitet werden. Die Herstellung kann durch Vermischen der Komponenten bzw. bereits vorgemischter Komponentengemische vor Ort geschehen und die Reaktionsmischung maschinell oder per Hand in z.B. zu verschliessende Öffnungen bzw. beheizte oder unbeheizte Formen eingegossen werden, wo sie dann aufschäumt bzw. aushärtet. Sie kann bei entsprechender technischer Ausrüstung auf die zu schützenden Substrate und Untergründe aufgesprüht, aufgestrichen oder aufgegossen werden. Es ist auch in Betracht zu ziehen, dass man mit den erfindungsgemässen Reaktionsgemischen zunächst Halbzeuge, z.B. Schaumstoffe oder Beschichtungen herstellt und diese dann in technisch erforderlicher Weise weiterverarbeitet, z.B. durch Schneiden, durch Warmverformen, Granulieren, Mahlen oder Mischen.

Durch Kombination der Reaktionsgemische mit geschäumten oder massiven anorganischen oder organischen Zuschlagstoffen, wie z.B. Polystyrolschaum, Polyurethanschaum oder Kies oder Blähton, Harnstoff- oder Phenolharzschäumen, Schaumglas, Holz, Mineralwolle, Bims usw., können auch Betone mit speziellen Intumeszenzeigenschaften erhalten werden. Die Anwendung der erfindungsgemässen Intumeszenzmassen zur Herstellung von mit Fasern oder Drähten bzw. Geweben oder Vliesen aus organischen oder anorganischen Materialien verstärkten Formteilen oder ihre Verwendung als Bestandteil in Mehrschicht- bzw. Sandwichaufbauten sind ebenfalls in Betracht zu ziehen.

Ausgangskomponenten für die Herstellung der erfindungsgemässen Intumeszenzmassen sind:

1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

n = 2–4, vorzugsweise 2, und

Q einen aliphatischen Kohlenwasserstoffrest mit 2–18, vorzugsweise 6–10 C-Atomen,

einen cycloaliphatischen Kohlenwasserstoffrest mit 4–15, vorzugsweise 5–10 C-Atomen,

einen aromatischen Kohlenwasserstoffrest mit 6–15, vorzugsweise 6–13 C-Atomen,

oder einen araliphatischen Kohlenwasserstoffrest mit 8–15, vorzugsweise 8–13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diioscyanat, Naphthylen-1,5-diisocyanat.

Ferner kommen beispielsweise erfindungsgemäss in Frage: Triphenylmethan-4,4',4''-triisocyanat, Polyphenyl-polymethylenpolyisocyanate, wie sie durch Anilin-Formaldehyd-Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäss US-Patentschrift 3 492 330, Allophanatgruppen

aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren oder vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), insbesondere aber Polyphenylpolymethylen-polyisocyanate, wie sie durch Anilin-Formaldehyd-Kondensation und anschliessende Phosgenierung hergestellt werden («rohes MDI»), ferner Carbodiimidgruppen, Urethangruppen, Allophanatgruppen, Isocyanaturat gruppen, Harnstoffgruppen oder Biuretgruppen aufweisenden Polyisocyanate («modifizierte Polyisocyanate»), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Mindestens zwei Hydroxylgruppen aufweisende phosphorhaltige Kondensationsprodukte, wie sie z.B. durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschliessendem Oxalkylieren, erhalten werden können. Derartige Kondensationsprodukte sind an sich bekannt, z.B. aus der DE-PS 1 143 022, US-PS 3 076 010, DE-AS 1 803 747 und DE-AS 1 928 265.

Erfindungsgemäss bevorzugt sind als mindestens zwei Hydroxylgruppen aufweisende phosphorhaltige Kondensationsprodukte solche der Formel

$$(RO)_2PO{-}CH_2{-}N=(CHX{-}CHX{-}OH)_2,$$

in der

R = $C_1$–$C_8$-Alkyl oder $C_1$–$C_8$-Hydroxyalkyl, vorzugsweise Ethyl oder Hydroxyethyl, und

X = H oder Methyl, vorzugsweise H, bedeuten.

3. Aromatische Hydroxycarbonsäuren oder deren Salze, z.B. Hydroxy-naphthalin-carbonsäuren, Salicylsäure, m-Hydroxybenzoesäure und/oder p-Hydroxybenzoesäure. Kern-substituierte, z.B. alkylierte Hydroxybenzolcarbonsäuren oder Acetylierungsprodukte oder Anhydride der Hydroxycarbonsäuren kommen ebenfalls in Betracht. Erfindungsgemäss sind Hydroxybenzoesäuren und/oder ihre Salze bevorzugt.

Da sich diese Säuren gut in der Komponente 2 auflösenlassen, ist es nicht notwendig, die bei Raumtemperatur pulverförmig vorliegenden Hydroxycarbonsäuren als Pulver in die Rezeptur einzusetzen.

Als Salze der aromatischen Hydroxycarbonsäuren kommen z.B. die Alkali-, Erdalkalisalze, insbesondere aber die Aminsalze in Betracht. Unter den zur Salzbildung heranzuziehenden Aminen sind ausser $NH_3$ wiederum solche mit niedrigem Dampfdruck bevorzugt, z.B. Alkoxylierungsprodukte von Ammoniak mit Propylenoxid, insbesondere aber Ethylenoxid, wie z.B. Ethanolamin, Diethanolamin und Triethanolamin. Es kommen als Salzbildner ebenfalls in Betracht die Alkoxylierungsprodukte anderer Amine, z.B. N-Methyldiethanolamin, N-Ethyldiethanolamin, N-Phenyldiethanolamin oder die Alkali- bzw. Erdalkalihydroxide.

Der Neutralisationsgrad der aromatischen Hydroxycarbonsäuren liegt in Bezug auf die Verwendung der eben genannten Salzbildner im allgemeinen unter 100%, vorzugsweise zwischen 0 und 75%.

4. Gegebenenfalls Wasser und/oder weitere organische Verbindungen mit gegenüber Isocyanaten reaktionsfähigen Wasserstoffatomen. Hierzu zählen

a) Verbindungen mit mindestens zwei gegenüber Isocyanaten reaktionsfähigen Wasserstoffatomen von einem Molekulargewicht in der Regel von 400–10 000. Hierunter versteht man neben Aminogruppen, Thiolgruppen oder Carboxylgruppen aufweisendem Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 6000, vorzugsweise 1000 bis 3000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von

homogenen und von zellförmigen Polyurethanen an sich bekannt sind. Erfindungsgemäss sind Polyester bevorzugt.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäurenhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylemglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Auch die erfindungsgemäss in Frage kommenden, mindestens zwei, inder Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäss in Frage.

Vertreter der genannten Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyethern und Polyestern, eingesetzt werden.

b) Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/ oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Ethylenglykol, Propylenglykol-(1,2) und -(1,3), Butylenglykol-(1,4), und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glycerin, Trimethylolpropan, Hexantriol-(1,2,6), Sorbit, Ricinusöl, Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Ethanolamin, Diethanolamin, N-Methyldiethanolamin, Triethanolamin und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in gegenwart von Metallverbindungen als Katalysator und von zur Endiolbildung befähigten Verbindungen als Co-Katalysator entstehen (DE-Offenlegungsschriften 2 639 084, 2 714 084,

2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhdrazodicarbonamiden, in niedermolekularen, mehrwertigen Alkoholen kommen erfindungsgemäss als Polyolkomponente in Betracht (DE-Offenlegungschrift 2 638 759).

Erfindungsgemäss geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäss DE-Offenlegungsschrift 2 614 244. Auch Hydrazin und substituierte Hydrazine, z.B. Methylhydrazin, N,N'-Dimethylhydrazin deren Homologe sowie Säuredihydrazide kommen erfindungsgemäss in Betracht. Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Ethergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen- 1,3-phenylendiamine (DE-Offenlegungsschriften 2 001 772, 2 025 896 und 2 065 869), 3,3'-Dichlor- 4,4'-diamino-diphenylmethan, Toluylendiamin, 4,4'-Diaminodiphenylmethan.

Ein erfindungsgemäss besonders gut geeigneter Polyoltyp sind die Ester aus 1,5–2 Mol Ethylenglykol und 1 Mol Benzoldicarbonsäure, z.B. Phthalsäure, durchschnittliches Molgewicht ca. 250–600. Es wurde gefunden, dass für die vorteilhaften Eigenschaften der neuen Intumeszenzmassen, insbesondere der Intumeszenzschäumen, nicht die für die konventionelle Polyurethanchemie üblichen stöchiometrischen Verhältnisse charakteristisch sind. Vielmehr werden die Komponenten 2, 3 und gegebenenfalls 4 ungeachtet der in Bezug auf die Isocyanatchemie zu fordernden Stöchiometrie zusammengestellt und die so erhältliche Mischung in einfachen Vorversuchen mit verschiedenen innerhalb eines erfindungsgemäss gegebenen Mengenspielraums liegenden Mengen des Polyisocyanats umgesetzt, um die gewünschte optimale Wirksamkeit empirisch zu ermitteln.

Die so gefundenen Richtmengen für die einzelnen Komponenten 2, 3 und gegebenenfalls 4 in dem mit dem Polyisocyanat umzusetzenden Reaktionsgemisch ergänzen sich zu 100% und betragen:

– für die mindestens zwei Hydroxylgruppen aufweisenden phosphohaltigen Kondensationsprodukte: 25 bis 80, vorzugsweise 40 bis 75 Gew.-%

– für die aromatische Hydroxycarbonsäure bzw. deren Salz: 10 bis 65, vorzugsweise 15 bis 40%

– für Wasser: 0 bis 8,5, vorzugsweise 0–5,5 Gew.-%;

– für die weitere organische Verbindung mit gegenüber Isocyanaten aktiven H-Atomen: 0 bis 50, vorzugsweise 0 bis 35 Gew.-%.

100 Gew.-Teile dieses Reaktionsgemisches werden in der Regel mit 50 bis 180, vorzugsweise 65 bis 150 Gew.-Teilen des Polyisocyanats umgesetzt.

Die Herstellung der Intumeszenzmassen kann in einem Lösungsmittel, vorzugsweise jedoch lösungsmittelfrei, erfolgen. Die bevorzugten Produkte sind Schaumstoffe; diese können Raumgewichte von ca. 15 bis 800 $kg/m^3$, bevorzugt zwischen 60 und 300 $kg/m^3$, aufweisen. Eine besonders ausgewogene Kombination zwischen aus Gründen der Isolierfähigkeit angestrebtem niedrigem Raumgewicht und für die Aufschäumwirkung bei Flammenzutritt in der Raumeinheit notwendiger Masse stellen erfindungsgemäss zugängliche Schaumstoffe mit Raumgewichten von ca. 80 bis 200 $kg/m^3$ dar.

Man kann die verschiedenen Reaktionskomponenten einzeln zusammenführen; zweckmässigerweise jedoch macht man eine Vormischung aus den mit den Polyisocyanaten (Komponente 1) reaktionsfähigen Komponenten 2, 3 und gegebenenfalls 4 und erhält so gegebenenfalls nach kurzem Erwärmen eine flüssige, zumeist als Lösung vorliegende Reaktionskomponente, in der alle notwendigen Bestandteile bis auf das Polyisocyanat enthalten sind. Auf diese Weise lassen sich die erfindungsgemässen Intumeszenzmassen als Zweikomponentengemisch formulieren bzw. aus diesem herstellen. Hierzu sind die üblichen Einrichtungen der Polyurethantechnologie einsetzbar.

Es ist durchaus möglich, der Komponentenvormischung, gegebenenfalls auch dem Isocyanat, noch weitere Rezepturbestandteile zuzusetzen, z.B. Melamin, Melaminkondensate, Harnstoff-Formaldehydkondensate, Melaminphosphate, Aminpolyphosphate, Phosphorsäureester z.B. Trikresylphosphat oder Dibutylkresylphosphat, Al-Oxidhydrate, Glaspulver, massive oder hohle Glas- oder sonstige Silikatperlchen und sonstige das Brandverhalten modifizierende Zusatzstoffe.

## Beispiele

Im folgenden wird die Erfindung beispielhaft erläutert. Die angegebenen Teile sind Gewichtsteile, sofern nicht anders vermerkt.

Es wurden folgende Komponenten eingesetzt:

Komponente A: (Komponente 2) mindestens zwei Hydroxylgruppen aufweisendes phosphorhaltiges Kondensationsprodukt: $(C_2H_5O)_2PO-CH_2-N=(CH_2-CH_2-OH)_2$

Komponente B: (Komponente 4) Wasser bzw. organische Verbindung mit aktiven H-Atomen:
B1 = Leitungswasser
B2 = Isopropanol
B3 = Oligoester aus Phthalsäure und Ethylenglykol, OH-Zahl ca. 280, Säurezahl ca. 0,6

Komponente C: (Komponente 3) Aromatische Hydroxycarbonsäuren bzw. deren Salze:
C1 = 4-Hydroxybenzoesäure
C2 = 3-Hydroxybenzoesäure
C3 = 2-Hydroxybenzoesäure
C4 = Umsetzungsprodukt aus 25 Teilen Salicylsäure und 20 Teilen Triethanolamin.

Es wurden folgende Tests und Beurteilungen vorgenommen:

Aufschäumen einer Materialprobe:

| | | |
|---|---|---|
| Volumensteigerung bis | 100%: | mässig |
| | 100–300%: | gut |
| | über 300%: | sehr gut. |

Klassifizierung des Nachbrennens nach Beflammung einer 2 g-Materialprobe mit einer Bunsenbrennerflamme:

| | |
|---|---|
| sofortiges Verlöschen: | kein |
| Verlöschen nach weniger als 3 Sekunden: | kurz |
| 5 Sekunden: | kaum. |

Es wurden folgende Intumeszenztests vorgenommen:

Test I: Die Materialprobe (2 g) wurde in einen auf 260 g vorgeheizten Heizschrank gebracht und dann nach einstündiger Lagerung bei 260 °C hinsichtlich des Aufschäumens beurteilt.

Test II: Die Materialprobe (2 g) wurde bei Raumtemperatur in einen Heizschrank gestellt und dieser im Laufe einer Stunde auf 260 °C gebracht, dann wurde das Material dort noch eine weitere Stunde belassen. Anschliessend wurde das stattgehabte Aufschäumen beurteilt. Dann wurde die vorbeanspruchte Probe einer nicht leuchtenden Bunsenbrennerflamme ausgesetzt und beobachtet, ob ein weiteres Aufschäumen («Nachschäumen») stattfindet,
Nachschäumen = +
kein Nachschäumen = 0
Schrumpfen = –

Test III: Eine 2 g-Materialprobe wurde mit einer nicht leuchtenden Bunsenbrennerflamme beaufschlagt. Dabei wurde das Aufschäumen und das Nachbrennen nach Entfernen der Flamme zu verschiedenen Stadien des Beflammungsprozesses beobachtet.

Wasserlagerungstest:
Eine Materialprobe (8 × 4 × 2 cm) wurde drei Tage unter Leitungswasser gelagert, dann wurde das Wasser abgegossen und durch neues Wasser ersetzt. Nach weiteren drei Tagen wurde das Wasser abgegossen, der Probekörper abgeschleudert und bei 75 °C zurückgetrocknet. Vor und nach dem Trocknen wurde geprüft, ob eine deutliche Volumenveränderung (Kantenlänge) oder eine stärkere Festigkeitsveränderung mit Zentimetermass bzw. durch manuelle Prüfung war. Die rückgetrockneten Proben wurden den Tests I, II und III unterzogen.

Die folgenden Beispiele sollen die Intumeszenzwirkung der erfindungsgemässen Zusätze von aromatischen Hydroxycarbonsäuren erläutern:

Vergleichsbeispiel 1
98 Teile Komponente A und 2 Teile Wasser werden mit 75 Teilen eines handelsüblichen technischen Polyisocyanats auf Basis von Anilin-Formaldehyd-Kondensaten gut verrührt. Es bildet sich ein Schaum mit Raumgewicht ca. 150 kg/m$^3$.

Test II Aufschäumen: nicht
Nachschäumen: 0

Da weder ein deutliches Aufschäumen noch ein Nachschäumen im für die Sicherheit von Intumeszenzmassen wesentlichen Test II gefunden wird, ist eine derartige Rezeptur nicht für Intumeszenzmassen empfehlenswert.

Beispiel 1
In 98 Teilen Komponente A werden 2 Teile Wasser und 40 Teile Hydroxybenzoesäure aufgelöst. 100 Teile dieser Lösung werden mit 75 Teilen des im Vergleich 1 verwendeten Isocyanats gut verrührt. Die entstehenden Intumeszenzschäume werden wiederum im Test II geprüft:

| Hydroxy-benzoe-säure | Raum-gewicht ($kg/m^3$) | Auf-schäumen | Nach-schäumen |
|---|---|---|---|
| para | 165 | sehr gut | + |
| ortho | 120 | gut | + |
| meta | 140 | gut | + |

Das Ergebnis zeigt, dass alle drei Hydroxybenzoesäuren zu einem brauchbaren Intumeszenzverhalten der Schäume führen. Selbstverständlich sind die Schäume gemäss Beispiel 1 in gleicher Weise schwer entflammbar wie das Muster aus dem Vergleich 1, d.h., im Nachbrennversuch erhalten sie die Klassifizierung: Nachbrennen kurz, d.h., sie verlöschen innerhalb von 3 Sekunden nach Entfernung der Flamme.

Beispiel 2

Von besonderer Wichtigkeit ist das Verhalten eines über längere Zeit gemäss Test II erhitzten Schaumes in Bezug auf das Nachschäumen bei letztendlicher Beaufschlagung mit einer Flamme. Ein guter Intumeszenzschaum sollte mindestens dann, falls er nicht ohnehin schon aufgeschäumt ist, noch aufschäumen können.

Löst man in 98 Teilen Komponente A 2 Teile Wasser, 25 Teile Salicylsäure und 20 Teile Triethanolamin (Salzbildner) auf und verschäumt diese Lösung durch Vermischen mit 216 Teilen des in Vergleich 1 beschriebenen Isocyanats, so erhält man einen Schaum, der gemäss Test II im Nachschäumen ausgezeichnet wirksam ist. Wenn man aus der sonst gleichartigen Rezeptur die Salicylsäure fortlässt, so erfolgt kein Nachschäumen mehr. In beiden Fällen lag das Raumgewicht der Schäume um 150 $kg/m^3$.

Beispiel 3

Eine Lösung aus
94 Teilen Komponente A
6 Teilen Komponente B1
40 Teilen Komponente C1
20 Teilen Komponente B3
wird in einer Maschine mit Rührwerksmischkopf mit 120 Teilen des in Beispiel 2 verwendeten Isocyanats in kontinuierlicher Betriebsweise vermischt. Das auslaufende Reaktionsgemisch schäumt nach 40 Sekunden auf.

Der gleiche Versuch wird gemacht, nur werden 60 Teile Komponente B3 und 160 Teile Isocyanat eingesetzt.

Zum Vergleich werden die beiden Versuche ohne Zusatz der Hydroxybenzoesäure gefahren:

| | Raum-gewicht ($kg/m^3$) | Test III Nach-brennen | Test II Auf-schäumen | Nach-schäumen |
|---|---|---|---|---|
| a) 40 C1/20 B3 | 130 | kein | gut | + |
| b) 00 C1/20 B3 | 138 | kaum | Schrumpf | – |
| c) 40 C1/60 B3 | 125 | kein | gut | + |
| c) 00 C1/60 B3 | 125 | kurz | Schrumpf | – |

Es zeigt sich, dass die unter Mitverwendung der Hydroxycarbonsäuren hergestellten Schäume, wenn in der Rezeptur noch Polyester-Hydroxylverbindungen mitverwendet werden, den ohne solche Säurezusätze hergestellten Schäumen deutlich überlegen sind. Bemerkenswert ist auch das durch den Zusatz der erfindungsgemässen Komponenten C nicht verschlechterte, sondern eher verbessere Nachbrennverhalten.

Lässt man die Schäume gemäss Beispiel 3 a) und 3 c) auf einer Bandschäumanlage herstellen, so erhält man Schaumstoffplatten. Diese Platten können als solche als Dämmplatten mit Intumeszenzcharakter verwendet oder thermoplastisch verformt werden. Hierzu werden 2 cm dicke Platten des Intumeszenzschaumstoffes auf ca. 150 °C im Wärmeschrank erhitzt (auch eine Hochfrequenz-, Mikrowellen- oder Infrarot-Beheizung ist möglich) und dann z.B. auf einer Lehre zu Rohren, Halbschalen gebogen, die nach dem Erkalten ihre Form beibehalten. Es ist auch möglich, die Platten auf einer geheizten Presse bei ca. 130 °C zu verdichten.

Wenn man die Komponente C1 durch die Komponenten C2 oder C3 ersetzt, ändern sich zwar die Raumgewichte der erhältlichen Schäume, nicht aber deren Intumeszeneigenschaften.

Beispiel 4

100 Teile Komponente A
20 Teile para-Hydroxybenzoesäure
20 Teile ortho-Hydroxybenzoesäure
2,5 Teile Wasser
werden vereinigt und bei ca. 60 °C gelöst. Dann rührt man bei Raumtemperatur in 40 Teile dieser Lösung 30 Teile eines mittelviskosen handelsüblichen Polyisocyanats auf Basis von Anilin-Formaldehyd-Kondensaten ein und erhält einen Hartschaum mit dem Raumgewicht 140 $kg/m^3$:

| | |
|---|---|
| Volumensteigerung bei Beflammung: | sehr gut |
| Nachbrennen: | kurz |
| Test I: | gut |
| Test II Aufschäumen: | gut |
| Test II Nachschäumen: | + |

Nach dem Wasserlagerungsversuch werden die gleichen Klassifizierungen erreicht.

Beispiel 5

Es wird wie in Beispiel 4 gearbeitet, es werden jedoch der Vormischung noch 10 Teile eines Polyesters aus Adipinsäure und Ethylenglykol (Molekulargewicht ca. 2000) sowie 40 Teile Komponente C1 zugesetzt. Der entstandene Hartschaum hat ein Raumgewicht von 145 kg/m$^3$.

| | |
|---|---|
| Test I: | gut |
| Test II Aufschäumen: | gut |
| Test II Nachschäumen: | + |
| Test III Aufschäumen: | sehr gut |
| Test III Nachbrennen: | kaum |

Nach Wasserlagerung werden die gleichen Klassifizierungen erreicht.

Beispiel 6

100 Teile Komponente A
40 Teile 4-Hydroxybenzoesäure

werden durch Erwärmen in eine Lösung überführt, dann setzt man noch 20 Teile Dibutylkresylphosphat hinzu. Dann verrührt man mit 100 Teilen des im Vergleich 1 benutzten Polyisocyanats. Die gut verrührte Lösung wird nunmehr auf eine Stahlplatte aufgesprüht. Dort erhärtet sie und bildet einen blasigen Film.

Löst man einen Teil des Filmes ab, ergeben sich vor und nach dem Wasserlagerungsversuch nach Test III die Klassifizierungen.

| | |
|---|---|
| Aufschäumen: | sehr gut |
| Nachbrennen: | kurz |

Die gleichen Klassifizierungen werden erreicht, wenn man den Phosphatweichmacher fortlässt, lediglich der Beschichtungsfilm ist dann etwas spröder. Bei Beflammen der Stahlplatte erfolgt die Intumeszenzreaktion, d.h. Bildung eines isolierenden Schaumes.

Beispiel 7

100 Teile Komponente A werden mit 20 Teilen Salicylsäure, 30 Teilen 4-Hydroxybenzoesäure und 25 Teilen Isopropanol (B2) in eine Lösung überführt. 40 Teile dieser Lösung werden mit 30 Teilen des in Vergleich 1 beschriebenen Isocyanats umgesetzt. Es bildet sich ein hochviskoses Material, das in Wasser unlöslich, wohl aber in Isopropanol löslich ist.

Man stellt eine 50%ige isopropanolische Lösung des Reaktionsproduktes her. Mit dieser Lösung wird eine Stahlplatte bestrichen und die gebildete Beschichtung bei 150 °C in 30 Min. zu einem harten unlöslichen Film aufgetrocknet. Bei Beflammen der Stahlplatte entwickelt sich aufgrund der Intumeszenzreaktion ein isolierender, feuerabweisender Schaum.

Das gleiche wird beobachtet, wenn man mit der Lösung einen Holzbalken satt anstreicht. Nach dem Trocknen bildet sich bei Beflammung ein isolierender Schaum, der das Holz vor dem Zugriff der Flamme schützt.

In einem mechanischen Emulgiergerät kann die Isopropanollösung auch mit Wasser in eine Emulsion überführt werden, aus der gegebenenfalls das Isopropanol durch Dünnschichtung entfernt werden kann. Derartige Emulsionen sind für Anstrichzwecke gut geeignet.

Beispiel 8

100 Teile Komponente A
20 Teile Komponente C1
20 Teile Komponente C2
50 Teile Komponente B3

werden gemischt und durch Erwärmen in Lösung gebracht. 40 Teile dieser Lösung werden bei Raumtemperatur mit 30 Teilen des in Vergleich 1 beschriebenen Isocyanats gut verrührt und sofort auf einen gesandstrahlten Stahlträger aufgetragen. Dort erhärtet das Material in wenigen Minuten zu einem harten Film. Bei Beflammung des Stahlträgers bildet der Film einen voluminösen isolierenden Schaum. Löst man einen Teil des Filmes von der Unterlage, so ergeben sich in den beschriebenen Tests vor und nach der Wasserlagerung die folgenden gleichartigen Klassifizierungen:

| | |
|---|---|
| Test I: | gut |
| Test II Aufschäumen: | gut |
| Test II Nachschäumen: | + |
| Test III Aufschäumen: | sehr gut |
| Test III Nachschäumen: | kurz |

Wiederholt man den gleichen Versuch, setzt der Vormischung jedoch noch 3 Teile Wasser hinzu, entsteht auf dem Stahlträger ein Schaumstoff, der die gleichen Klassifizierungen erreicht.

Beispiel 9

In einer Brandmauer von 15 cm Stärke befindet sich ein Durchbruch der Masse 15 × 30 × 15 cm. Durch diesen Durchbruch auf einer Kabeltrasse von 20 cm Breite liegend, sind mehrere Elektrokabel verschiedenen Durchmessers und verschiedener Isolationsart hindurchgeführt. Diese Öffnung ist einseitig provisorisch mit einem Pappdeckel verschlossen. Von der offenen Seite her wird nun ein frisch hergestelltes Zwei-Komponenten-Gemisch eingegossen (ca. 1000 g):

| Komponente 1 | Komponente 2 |
|---|---|
| 100 Teile Komponente A | Polyisocyanat aus |
| 40 Teile Komponente C1 | Vergleichsversuch 1 |
| 20 Teile Komponente B3 | |
| als Lösung | |

In der Höhlung schäumt das Reaktionsgemisch auf und füllt alle Zwickel zwischen Kabeln, Trasse und Mauerwerk. Aus der Öffnung heraustretender Schaum wird nach Erhärtung abgeschnitten. Im Test erreicht der Schaum vor und nach Wasserlagerung gleiche Klassifizierung:

| | |
|---|---|
| Test I: | gut |
| Test II Aufschäumen: | gut |
| Test II Nachschäumen: | + |
| Test III Aufschäumen: | sehr gut |
| Test III Nachbrennen: | kein |

Raumgewicht ca. 149 kg/m$^3$.

Bei Beflammung mit einem Ölbrenner in einem Kleinbrennofen zur Testung von Mauerdurchbrüchen werden auch nach 30 Min. Versuchsdauer noch keine Brandgase oder Flammen durch die verfahrensgemäss ausgeschäumte Maueröffnung hindurchgelassen. Anschliessend lassen sich die unbeansprucht gebliebenen Teile der Schaumfüllung leicht aus der Öffnung herausarbeiten, so dass eine Neuinstallation ohne Aufwand möglich ist.

Beispiel 10

Eine Mischung aus

100 Teilen Komponente A
3,5 Teilen Komponente B1
25 Teilen Komponente C3
20 Teilen Triethanolamin

wird durch Erwärmen in Lösung gebracht und bei Raumtemperatur mit einer Polyurethan-Zweikomponenten-Sprühpistole im Verhältnis von 40 Teilen Mischung zu 60 Teilen Isocyanat gemäss Vergleich 1 gemischt und auf Stahlrohre und Aluminiumplatten sowie Holzbretter aufgesprüht. In allen Fällen bildet sich auf dem Substrat ein gut haftender Schaumfilm. Bei Beflammung mit einem entleuchteten Erdgasgebläse (Flammentemperatur 800 bis 1100 °C) bildet sich sofort aus der Schaumschicht ein sich stark aufblähender Intumeszenzschaum, der die rückwärtigen Teile vor weiterem Flammenzutritt schützt.

Hebt man von der unbeanspruchten Schaumbeschichtung Schaumproben ab, so haben diese bei einem Raumgewicht um 190 kg/m$^3$ in den beschriebenen Test folgende Eigenschaften, die vor und nach dem Wasserlagerungsversuch erreicht werden:

| | |
|---|---|
| Test I: | gut |
| Test II Aufschäumen: | gut |
| Test II Nachschäumen: | gut |
| Test III Schäumen: | sehr gut |
| Test III Nachbrennen: | kurz |

Beispiel 11

Die gemäss Beispiel 7 erhaltene 60%ige Isopropanollösung wird mit 50% (bezogen auf Feststoffanteil) Melaminpulver versetzt und die so erhaltene viskose Mischung auf eine Asbestzementplatte aufgetragen. Nach dem Austrocknen (30 Tage im Laborraum) wird der Test III an der trockenen Beschichtung vorgenommen:

| | |
|---|---|
| Aufschäumen: | gut |
| Nachbrennen: | kein |

**Patentansprüche**

1. Gegebenenfalls geschäumte Intumeszenzmassen, erhalten durch Umsetzung von

1. Polyisocyanaten mit

2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschliessendem Oxalkylieren, und

3. aromatischen Hydroxycarbonsäuren oder deren Salzen und

4. gegebenenfalls Wasser und/oder weiteren organischen Verbindungen mit gegenüber Isocyanaten reaktionsfähigen Wasserstoffatomen.

2. Intumeszenzmassen gemäss Anspruch 1, erhalten durch Umsetzung von 50 bis 180 Gew.-Teilen eines Polyisocyanats mit 100 Gew.-Teilen eines Gemisches, bestehend aus 20 bis 80 Gew.-% an mindestens zwei Hydroxylgruppen aufweisenden phosphorhaltigen Kondensationsprodukten und 10 bis 65 Gew.-% an Hydroxycarbonsäuren oder deren Salzen und 0 bis 8,5 Gew.-% Wasser und/oder 0 bis 50 Gew.-% an weiteren organischen Verbindungen mit gegenüber Isocyanaten reaktionsfähigen Wasserstoffatomen.

3. Intumeszenzmassen gemäss Anspruch 1 und 2, dadurch gekennzeichnet, dass als Polyisocyanate solche verwendet werden, wie sie durch Anilin-Formaldehyd-Kondensation und anschliessende Phosgenierung erhalten werden.

4. Intumeszenzmassen gemäss Anspruch 1 bis 3, dadurch gekennzeichnet, dass als mindestens zwei Hydroxylgruppen aufweisende Kondensationsprodukte solche der Formel

$(RO)_2PO-CH_2-N=(CHX-CHX-OH)_2$, in der

R = $C_1$–$C_8$-Alkyl oder $C_1$–$C_8$-Hydroxyalkyl und X = H oder Methyl bedeuten, verwendet werden.

5. Intumeszenzmassen gemäss Anspruch 1 bis 4, dadurch gekennzeichnet, dass als aromatische Hydroxycarbonsäuren Hydroxybenzoesäuren verwendet werden.

**Revendications**

1. Matières intumescentes éventuellement transformées en mousse, obtenues par réaction

1. de polyisocyanates avec

2. des produits de condensation contenant du phosphore portant au moins deux groupes hydroxyle, pouvant être obtenus par condensation de mono- et/ou de polyamines primaires ou secondaires aliphatiques, cycloaliphatiques, aromatiques, araliphatiques ou hétérocycliques renfermant éventuellement des groupes OH, de composés carbonyliques et de phosphites de dialkyle, le cas échéant avec oxalkylation subséquente, et

3. des acides hydroxycarboxyliques aromatiques ou leurs sels et

4. éventuellement de l'eau et/ou d'autres composés organiques portant des atomes d'hydrogène aptes à réagir vis-à-vis d'isocyanates.

2. Matières intumescentes suivant la revendication 1, obtenues par réaction de 50 à 180 parties en poids d'un polyisocyanate avec 100 parties en poids d'un mélange formé de 20 à 80% en poids de produits de condensation contenant du phosphore portant au moins deux groupes hydroxyle

et 10 à 65% en poids d'acides hydroxycarboxyliques ou leurs sels et 0 à 8,5% en poids d'eau et/ou 0 à 50% en poids d'autres composés organiques portant des atomes d'hydrogène aptes à réagir vis-à-vis d'isocyanates.

3. Matières intumescentes suivant les revendications 1 et 2, caractérisées en ce qu'on utilise comme polyisocyanates des polyisocyanates tels qu'on en obtient par condensation aniline-formaldéhyde et phosgénation subséquente.

4. Matières intumescentes suivant les revendications 1 à 3, caractérisées en ce qu'on utilise comme produits de condensation portant au moins deux groupes hydroxyle des produits de formule

$$(RO)_2PO{-}CH_2{-}N=(CHX{-}CHX{-}OH)_2$$

dans laquelle

R = alkyle en $C_1$ à $C_8$ ou hydroxyalkyle en $C_1$ à $C_8$ et

X = H ou méthyle.

5. Matières intumescentes suivant les revendications 1 à 4, caractérisées en ce qu'on utilise comme acides hydroxycarboxyliques aromatiques des acides hydroxybenzoïques.

## Claims

1. Optionally foamed intumescent compositions obtained by reacting:

1. polyisocyanates with

2. phosphorus-containing condensation products having at least two hydroxyl groups obtainable by condensing primary or secondary aliphatic, cycloaliphatic, aromatic, araliphatic or heterocyclic monoamines and/or polyamines optionally containing OH-groups, carbonyl compounds and dialkyl phosphites, otpionally followed by alkoxylation, and

3. aromatic hydroxy carboxylic acids or salts thereof and

4. optionally water and/or other organic compounds containing isocyanate-reactive hydrogen atoms.

2. Intumescent compositions according to Claim 1 obtained by reacting from 50 to 180 parts, by weight, of a polyisocyanate with 100 parts, by weight, of a mixture consisting of from 20 to 80%, by weight, of phosphorus-containing, condensation products having at least two hydroxyl groups and from 10 to 65%, by weight, of hydroxy carboxylic acids or salts thereof and from 0 to 9,5%, by weight, of water and/or from 0 to 50%, by weight, of other organic compounds containing isocyanate-reactive hydrogen atoms.

3. Intumescent compositions according to Claims 1 and 2, characterised in that polyisocyanates of the type obtained by condensing aniline with formaldehyde, followed by phosgenation, are used.

4. Intumescent compositions according to Claims 1 to 3, characterised in that the condensation products containing at least two hydroxyl groups used are those of the formula

$$(RO)_2{-}PO{-}CH_2{-}N=(CHX{-}CHX{-}OH)_2,$$

wehrein

R represents $C_1$–$C_8$ alkyl or $C_1$–$C_8$ hydroxy alkyl; and

X represents H or methyl.

5. Intumescent compositions according to Claims 1 to 4, characterised in that hydroxy benzoic acids are used as the aromatic hydroxy carboxylic acids.